# FASCICULE DE BREVET EUROPEEN

(11) **EP 3 717 274 B1**
(45) Date de publication et mention de la délivrance du brevet: **01.03.2023**
(21) Numéro de dépôt: 18797014.0
(22) Date de dépôt: 11.10.2018
(51) Int. Cl.: B60B 3/04, B60B 3/00, B60B 3/10

(54) **VEHICULE AUTOMOBILE AVEC ROUES HYBRIDES ET PROCEDE DE FABRICATION**
KRAFTFAHRZEUG MIT HYBRIDRÄDERN UND VERFAHREN ZUR HERSTELLUNG
MOTOR VEHICLE WITH HYBRID WHEELS AND METHOD OF PRODUCTION

(30) Priorité: 27.11.2017 FR 1761196
(43) Date de publication de la demande: 07.10.2020
(73) Titulaire: PSA Automobiles SA, 78300 Poissy (FR)
(72) Inventeur: PALPACUER, Eric, 75013 PARIS (FR); PERRIS MAGNETTO, Gabriele, 10098 Rivoli (TO) (IT); KALIFA, Alain, 95540 Mery Sur Oise (FR)
(86) Numéro de dépôt international: PCT/FR2018/052529
(87) Numéro de publication internationale: WO 2019/102086

(56) Documents cités:
- EP-A1- 3 130 477
- CN-U- 205 365 051
- CN-U- 205 930 005
- FR-A1- 2 515 115
- FR-A1- 2 992 585
- JP-A- H09 202 101
- US-A1- 2004 107 576
- US-A1- 2013 257 139

## Description

L'invention a trait à un véhicule comprenant des roues hybrides. L'invention propose également une roue avec une jante et un voile interne en différents matériaux. L'invention concerne un procédé de fabrication d'une roue de véhicule.

Un véhicule automobile comporte couramment quatre liaisons au sol, chacune avec une roue recevant un pneumatique en contact du sol. A cet effet, la roue présente une jante annulaire définissant une chambre étanche avec le pneumatique, et un voile fixé à un moyeu du véhicule. Le voile est ajouré afin de réduire la masse comme l'inertie de la roue, et donc la consommation du véhicule. Les ajours permettent de définir des branches selon un design prédéfini, ce qui améliore la qualité perçue du véhicule.

Le document EP 1 418 011 A1 divulgue une roue de véhicule du type automobile. La roue comporte une jante externe et un voile interne en forme de disque. Le voile interne est inséré en force à l'intérieur de la jante. Quatre soudures sont réparties autour du voile interne et permettent de fixer ce dernier à l'intérieur de la jante. Cependant, la résistance d'une telle roue reste limitée, et des pics de contraintes peuvent provoquer une rupture. Afin de se prémunir d'un tel risque le voile et la jante doivent être épaissis, ce qui augmente la masse du véhicule.

On connait encore le document FR2992585A1 correspondant au préambule de la revendication 1.

L'invention a pour objectif de résoudre au moins un des problèmes posés par l'art antérieur. Plus précisément, l'invention a pour objectif d'améliorer la résistance d'une roue. L'invention vise également à optimiser la masse, la rigidité et la durabilité d'une roue de véhicule automobile.

L'invention a pour objet un véhicule, notamment un véhicule automobile, le véhicule comprenant un moyeu, et une roue avec un axe de rotation, une jante autour de l'axe de rotation et un voile reliant la jante au moyeu, le voile comprenant une pluralité de branches s'étendant radialement et réparties autour de l'axe de rotation, remarquable en ce que la jante comprend une soudure disposée angulairement entre deux branches consécutives du voile, la roue comprenant un jeu radial séparant le voile de la jante, la soudure étant disposée angulairement au niveau du jeu radial.

Selon des modes particuliers de réalisation, le véhicule peut comprendre une ou plusieurs des caractéristiques suivantes, prises isolément ou selon toutes les combinaisons techniques possibles :
- Le voile présente plusieurs évidements répartis angulairement autour de l'axe de rotation en formant une alternance avec les branches, la soudure étant disposée angulairement au niveau d'un des évidements.
- Le voile est réalisé en acier, et la jante est réalisée en aluminium.
- Le voile comporte une zone de moindre épaisseur radiale au niveau de laquelle est positionnée la soudure.
- Le voile comporte un rebord circulaire chevauchant la soudure suivant la circonférence de la jante.
- La soudure est une première soudure, notamment une soudure axiale, et le voile est fixé à la jante à l'aide de deuxièmes soudures, chaque deuxième soudure étant disposée angulairement à distance de la première soudure.
- Le voile est venu de matière.
- La jante est venue de matière.
- L'ensemble des évidements s'étend sur la majorité de la circonférence de la jante.
- La soudure est disposée angulairement à distance de chaque branche.
- Le voile comporte une portion centrale fixée au moyeu, les branches reliant la portion centrale à la jante.
- La soudure s'étend axialement sur toute la largeur de la jante.
- Les branches et les évidements forment une alternance.
- La soudure est libre de contact avec le voile.
- La jante présente un axe de symétrie confondu avec l'axe de rotation.
- La roue comprend une valve traversant une ouverture formée dans la jante, à distance angulairement de la soudure.
- La jante et le voile sont réalisés en matériaux différents, et/ou en matériaux métalliques.
- La densité du matériau de la jante est inférieure à la densité de matériau du voile.
- Les branches et/ou les évidements sont réparti(e)s angulairement à l'intérieur de la jante.
- L'épaisseur du voile est supérieure ou égale à l'épaisseur de la jante, éventuellement au moins deux fois supérieure.
- Le voile comprend des jonctions arquées reliant les extrémités radialement externes des branches, la soudure étant disposée au niveau d'une desdites jonctions arquées.
- La jante comprend une tôle annulaire avec deux bords opposés selon la circonférence, la soudure reliant lesdits deux bords opposés.
- La soudure s'étendant le long de l'axe de rotation.
- L'épaisseur radiale du jeu radial est inférieure à l'épaisseur radiale du voile.

L'invention a également pour objet une roue de véhicule comprenant une jante externe et un voile interne destiné à être fixé à un moyeu du véhicule, le voile comprenant une pluralité de branches radiales réparties angulairement à l'intérieur de la jante, remarquable en ce que la jante comprend une soudure disposée angulairement entre deux branches consécutives du voile, la roue comprenant un jeu radial séparant le voile de la jante, la soudure étant disposée angulairement au niveau du jeu radial.

L'invention a également pour objet une roue de véhicule, notamment automobile, la roue comprenant une jante, un voile, et une interface circulaire entre la jante et le voile, remarquable en ce que l'interface présente une zone angulaire avec une moindre pression radiale entre la jante et le voile, et en ce que la jante comprend une soudure disposée angulairement au niveau de ladite zone angulaire.

L'invention a également pour objet une roue de véhicule, notamment automobile, la roue comprenant un axe central, une jante avec une surface annulaire interne placée autour de l'axe, et un voile, remarquable en ce que le voile comporte des zones raides et des zones de moindre raideur radiale qui forment une alternance le long de la surface annulaire interne de la jante, et en ce que la jante comprend une soudure disposée angulairement au droit, notamment en face, d'une zone de moindre raideur du voile.

L'invention a également pour objet un procédé de fabrication d'une roue de véhicule, le procédé comprenant les étapes suivantes : (a) fourniture ou réalisation d'une jante externe, (b) fourniture ou réalisation d'un voile interne, (c) frettage du voile interne à l'intérieur de la jante externe, remarquable en ce qu'à l'étape (a) fourniture ou réalisation d'une jante externe, la jante externe comprend une soudure ; à l'étape (b) fourniture ou réalisation d'un voile interne, ledit voile présente plusieurs branches réparties angulairement ; et pendant l'étape (c) frettage, la soudure est angulairement entre deux branches consécutives du voile, et à l'issue de l'étape (c) frettage, le voile et la jante présentent une interface circulaire formant une alternance de premières zones et de deuxièmes zones, la pression de contact radial entre le voile et la jante étant supérieure dans les deuxièmes zones par rapport aux premières zones, et la soudure étant disposée angulairement dans l'une des premières zones.

Selon un mode particulier, la jante et/ou le voile sont formés par des tôles, notamment de tôle emboutie et/ou de tôle galetée.

L'invention optimise la position angulaire de la soudure de fermeture de la jante par rapport aux efforts à l'interface jante/voile tant lors de la fabrication qu'en fonctionnement. En effet, les contraintes mécaniques dans les zones de contact entre le voile et la jante restent à distance de la soudure de cette dernière, ce qui améliore le comportement en fatigue. Par ailleurs, disposer la soudure de la jante entre des branches, et donc au droit d'un évidement allonge la durée de vie.

D'autres caractéristiques et avantages de la présente invention seront mieux compris à l'aide de la description donnée à titre d'exemple et en référence aux dessins parmi lesquels :
La figure 1 présente une roue de véhicule selon l'invention.
La figure 2 illustre une coupe de la roue le long de la soudure selon l'invention.
La figure 3 montre un agrandissement d'une partie de la roue tracée en figure 1.
La figure 4 est un diagramme d'un procédé de fabrication d'une roue de véhicule selon l'invention.

Dans la description qui va suivre, la direction axiale est considérée comme le long de l'axe de rotation de la roue, ou encore comme l'axe de symétrie de la jante. La direction radiale est considérée comme perpendiculaire à l'axe de rotation, respectivement perpendiculaire à l'axe de symétrie.

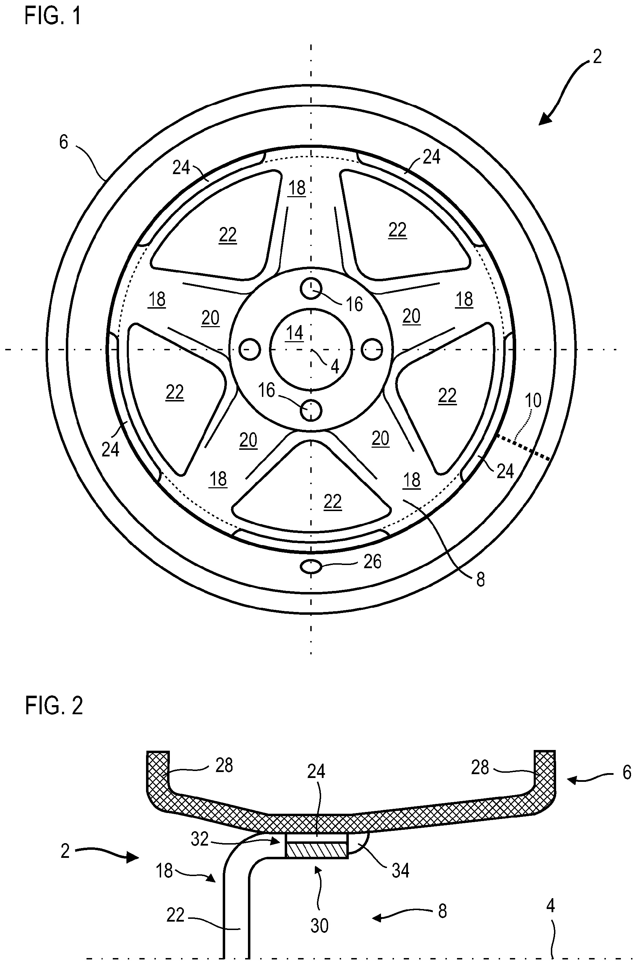

La figure 1 est une vue de face d'une roue 2 de véhicule, notamment un véhicule automobile (non représenté). La roue 2 est vue le long de l'axe de rotation 4. Elle permet le montage d'un pneumatique (non représenté) destiné à venir en contact de la route et à supporter le poids du véhicule correspondant.

La roue 2 comprend une jante 6 et un voile 8, notamment une jante externe et un voile interne. La jante 6 peut être de forme annulaire, et peut présenter une variation de diamètre le long de l'axe de rotation 4. La jante 6 peut être produite en matériau plus léger que le voile 8. Cela réduit significativement l'inertie de la roue 2 autour de son axe de rotation 4. Ainsi, la jante 6 peut être produite en aluminium ou en alliage d'aluminium, et le voile 8 peut être produit en acier. De ce fait, la roue est de type hybride, ou hétérogène, d'un point de vue des matériaux employés.

Le voile 8 permet de relier la jante 6 à un support de montage tel un moyeu tournant (non représenté) du véhicule. La jante 6 peut être formée par une tôle matérialisant une boucle fermée par une soudure 10. Selon la circonférence, cette soudure 10 peut lier deux bords opposés de la tôle dont est issue la jante 6. La jante 6 permet de former une chambre torique et étanche en combinaison avec le pneumatique, permettant le gonflage à une pression de service.

Le voile 8 peut présenter un orifice central 14 traversé par le moyeu (non représenté). Des orifices de fixation 16 peuvent servir à la fixation de la roue 2 au moyeu. Une série de branches 18 s'étendent radialement, c'est-à-dire perpendiculairement par rapport à l'axe de rotation 4. Les branches 18 peuvent être régulièrement réparties angulairement autour de l'axe de rotation 4, et donc à l'intérieur de la jante 6. Des raidisseurs 20 peuvent être conformés dans les branches 18.

Le voile 8 peut présenter des évidements 22. Les évidements 22 peuvent être des évidements principaux. Ils peuvent être de forme triangulaire, et présenter un côté courbe qui épouse la surface interne de la jante 6. Les évidements 22 peuvent être répartis angulairement autour de l'axe de rotation 4 de manière homogène. Les évidements 22 peuvent délimiter angulairement les branches 18. Chaque évidement peut s'étendre d'une branche à la branche suivante. Les évidements 22 et les branches 18 peuvent présenter une même hauteur radiale. Ainsi, le voile 8 peut présenter une alternance de branches 18 et d'évidements 22.

Entre les branches 18, éventuellement au droit radialement des évidements 22, la roue 2 peut comprendre des jeux radiaux 24 entre la jante 6 et le voile 8. Ces jeux radiaux 24 peuvent être des évidements radiaux séparant la jante 6 du voile 8.

Dans le présent exemple, cinq branches 18, cinq évidements 22 et cinq jeux radiaux 24 sont représentés. Toutefois, il est possible d'en faire varier le nombre. Par ailleurs, le nombre de jeux radiaux 24 ne dépend ni du nombre de branches 18, ni du nombre d'évidements 22. Des évidements peuvent être superposés radialement.

Par ailleurs, la jante 6 peut inclure une ouverture 26 pour une valve de gonflage (non représentée) du pneumatique. Cette ouverture 26 peut être à distance angulairement de la soudure 10. Elle peut être au niveau, angulairement, d'un autre évidement 22 que celui où se trouve la soudure 10.

La figure 2 présente une coupe de la roue 2 telle que décrite en figure 1. La coupe est effectuée le long de la soudure 10 et/ou le long de l'axe de rotation 4, ou axe central de la roue 2. Les épaisseurs peuvent être figuratives. A titre d'exemple, le voile peut présenter une épaisseur comprise entre 3 mm et 6 mm ; et la jante peut présenter une épaisseur comprise entre 1,5 mm et 3,7 mm. Selon une combinaison de l'invention, l'épaisseur de la jante est de l'ordre de 3,7 mm, et l'épaisseur du voile est de l'ordre de 6 mm.

La soudure 10 s'étend sur toute la hauteur radiale de la jante 6, et sur toute la longueur axiale. Elle peut relier les épaulements 28 destinés à recevoir les flancs du pneumatique (non représenté). La soudure 10 peut être formée sur toute l'épaisseur de la tôle formant la jante 6.

Le voile 8 peut présenter un rebord circulaire 30. Ce dernier peut former une portée tubulaire, tel un cerclage, d'où s'étendent les branches 18. Le rebord circulaire 30 peut entourer les évidements 22 intercalés entre les branches 18. Le rebord circulaire 30 peut appartenir à l'interface entre la jante 6 et le voile 8. Les jeux radiaux 24 peuvent former des zones de moindre épaisseur 32 dans le voile 8. Il peut s'agir de zones de moindre épaisseur radiale apparaissant dans le rebord circulaire 30. Pour cela, la tôle dont est issu le voile 8 peut être amincie.

Alternativement, la tôle peut être épaissie au niveau des branches 18, ce qui permet l'apparition des zones de moindre épaisseur 32 entre les branches 18. Ou encore, le voile pourrait être taillé dans la masse.

Un ou plusieurs cordons de soudure 34 peuvent fixer la jante 6 au voile 8. Les cordons de soudure peuvent être angulairement entre les jeux radiaux 24, et/ou au droit des branches 18. Ces cordons de soudure 34 peuvent former une soudure discontinue.

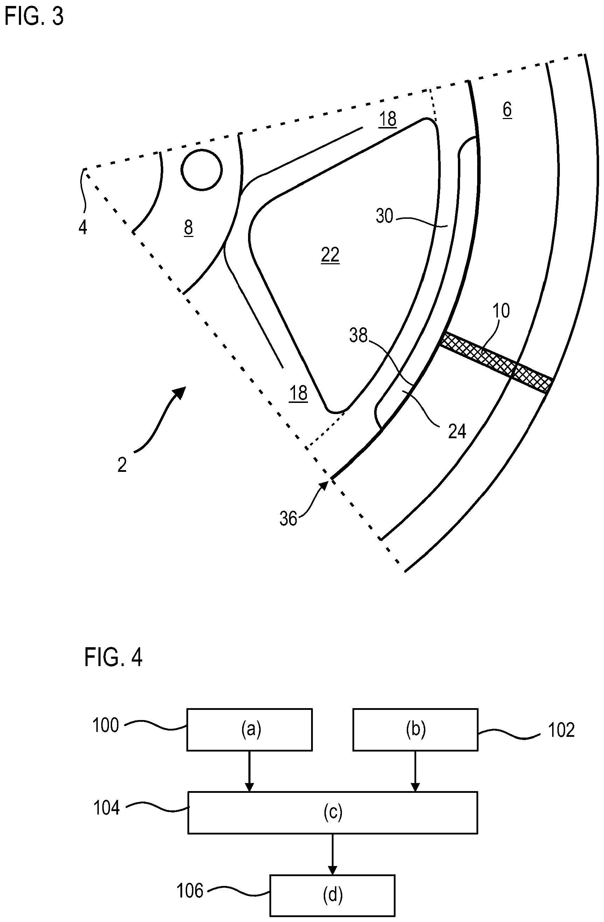

La figure 3 est un agrandissement de la roue 2 telle qu'illustrée en figures 1 et 2.

La soudure 10 peut notamment être disposée au niveau de l'étendue angulaire d'un des jeux radiaux 24. Le jeu radial 24 peut s'étendre perpendiculairement par rapport à la soudure 10. Il peut être de l'ordre de 0,5 mm. Ainsi, la soudure 10 est séparée du voile 8 par un des jeux radiaux 24, et évite qu'il y ait une transmission d'efforts vers cette soudure 10 puisqu'il n'y a pas de contact avec le voile 8.

La transmission d'efforts est également limitée par le positionnement de la soudure 10 entre deux branches 18 successives, ou branches voisines, de la rangée formée dans le voile. La soudure 10 est disposée entre deux branches 18 en regard selon la circonférence. Ainsi, les branches 18 ne viennent pas en appui radial contre la soudure 10 ce qui y diminue les contraintes mécaniques. La présence de l'évidement 22 entre la soudure 10 et l'axe de rotation 4 préserve encore la soudure 10. Il peut être noté que le rebord circulaire 30 permet de relier les branches 18 selon la circonférence, et y forme une jonction arquée.

La présence des jeux radiaux 24 implique que l'interface 36 entre le voile 8 et la jante 6 est discontinue. Cette interface 36 peut être circulaire, et peut être une interface de fixation et/ou une interface de contact radial.

Puisque le voile 8 peut être fretté contre la surface interne 38 de la jante 6, l'interface de fixation 36 entre le voile et la jante peut présenter une variation circonférentielle de la pression de contact radial. Cette interface 36 peut présenter des zones angulaires contre les branches 18 où la pression de contact est supérieure à la pression de contact dans les zones angulaires face aux évidements 22 et où la soudure 10 est placée.

La figure 4 est un diagramme du procédé de fabrication de la roue telle que présentée en relation avec les figures 1 à 3.

Le procédé peut comprendre les étapes suivantes, éventuellement réalisées dans l'ordre qui suit :
(a) fourniture ou réalisation d'une jante 100 externe avec une soudure,
(b) fourniture ou réalisation d'un voile 102 interne avec plusieurs branches ; plusieurs évidements et plusieurs jeux radiaux répartis angulairement,
(c)frettage 104 du voile interne à l'intérieur de la jante externe,
(d) soudage 106 du voile à la jante, cette étape étant optionnelle puisque le frettage peut suffire.

A l'étape (a) fourniture ou réalisation d'une jante 100, la soudure peut être avec réalisée avec un arc et un apport de métal sous une atmosphère de gaz inerte, également désignée par l'acronyme « MIG » qui correspond à l'expression anglo-saxonne « Metal Inert Gas ».

Pendant l'étape (c) frettage, par exemple du début jusqu'à la fin, la soudure de la jante est angulairement entre deux branches consécutives du voile. Le début peut être considéré comment le moment où la jante et le voile rentrent en contact.

Aux étapes (a) et (b) de fabrication de la jante et du voile, ces derniers peuvent être produits à partir de tôles issues de bobines. La tôle du voile peut être mise en forme par emboutissage afin de la rendre galbée et d'y découper les évidements comme l'ouverture et les orifices. Concernant la jante, un ruban de tôle peut être arqué afin de réaliser une boucle fermée. Deux bords opposés selon la circonférence sont mis en correspondance puis soudés. Le tube ainsi obtenu est ensuite conformé, par exemple par galetage ou par roulage de manière à creuser une zone centrale circulaire et à redresser des bords circulaires donnant naissance à des épaulements.

À l'issue de l'étape (c) frettage 104, le voile et la jante peuvent présenter une interface circulaire. Cette interface peut former une alternance de premières zones et de deuxièmes zones, la pression de contact radial entre le voile et la jante étant supérieure dans les deuxièmes zones par rapport aux premières zones. La soudure peut être disposée angulairement dans l'une des premières zones afin de la préserver.

A l'étape (d) soudage 106, le soudage peut être un soudage selon un procédé de transfert de métal à froid, également connu sous l'acronyme « CMT » qui correspond à l'expression anglo-saxonne « Cold Metal Transfer ».

## Revendications

1. Véhicule, notamment un véhicule automobile, le véhicule comprenant un moyeu, et une roue (2) avec un axe de rotation (4), une jante (6) autour de l'axe de rotation (4) et un voile (8) reliant la jante (6) au moyeu,
le voile (8) comprenant une pluralité de branches (18) s'étendant radialement et réparties autour de l'axe de rotation (4),
**caractérisé en ce que** la jante (6) comprend une soudure (10) disposée angulairement entre deux branches (18) consécutives du voile (8), la roue (2) comprenant un jeu radial (24) séparant le voile (8) de la jante (6), la soudure (10) étant disposée angulairement au niveau du jeu radial (24).

2. Véhicule selon la revendication 1, **caractérisé en ce que** le voile (8) présente plusieurs évidements (22) répartis angulairement autour de l'axe de rotation (4) en formant une alternance avec les branches (18), la soudure (10) étant disposée angulairement au niveau d'un des évidements (22).

3. Véhicule selon la revendication 1 ou la revendication 2, **caractérisé en ce que** le voile (8) est réalisé en acier, et la jante (6) est réalisée en aluminium.

4. Véhicule selon l'une des revendications 1 à 3, **caractérisé en ce que** le voile (8) comporte une zone de moindre épaisseur radiale au niveau de laquelle est positionnée la soudure (10).

5. Véhicule selon l'une des revendications 1 à 4, **caractérisé en ce que** le voile (8) comporte un rebord circulaire (30) chevauchant la soudure (10) suivant la circonférence de la jante (6).

6. Véhicule selon l'une des revendications 1 à 5, **caractérisé en ce que** la soudure (10) est une première soudure, notamment une soudure axiale, et le voile (8) est fixé à la jante (6) à l'aide de deuxièmes soudures (34), chaque deuxième soudure (34) étant disposée angulairement à distance de la première soudure.

7. Roue (2) de véhicule comprenant une jante externe (6) et un voile interne (8) destiné à être fixé à un moyeu du véhicule, le voile (8) comprenant une pluralité de branches (18) réparties angulairement à l'intérieur de la jante (6), **caractérisée en ce que** la jante (6) comprend une soudure disposée angulairement entre deux branches (18) consécutives du voile (8), la roue (2) comprenant un jeu radial (24) séparant le voile (8) de la jante (6), la soudure (10) étant disposée angulairement au niveau du jeu radial (24).

8. Procédé de fabrication d'une roue (2) de véhicule, le procédé comprenant les étapes suivantes :
a) fourniture ou réalisation d'une jante externe (100),
b) fourniture ou réalisation d'un voile interne (102),
c) frettage (104) du voile interne (8) à l'intérieur de la jante externe (6), **caractérisé en ce qu'**à l'étape (a) fourniture ou réalisation d'une jante externe (100), la jante externe comprend une soudure (10);
à l'étape (b) fourniture ou réalisation d'un voile interne (102), ledit voile (8) présente plusieurs branches (18) réparties angulairement ;
et
pendant l'étape (c) frettage (104), la soudure (10) est angulairement entre deux branches (18) consécutives du voile (8), et à l'issue de l'étape (c) frettage (104), le voile (8) et la jante (6) présentent une interface circulaire (36) formant une alternance de premières zones et de deuxièmes zones, la pression de contact radial entre le voile (8) et la jante (6) étant supérieure dans les deuxièmes zones par rapport aux premières zones, et la soudure (10) étant disposée angulairement dans l'une des premières zones.

## Patentansprüche

1. Fahrzeug, insbesondere Kraftfahrzeug, wobei das Fahrzeug eine Nabe und ein Rad (2) mit einer Drehachse (4), einer Felge (6) um die Drehachse (4) und einem die Drehachse (8) verbindenden Steg (8) umfasst Felge (6) zur Nabe,
der Schleier (8) eine Vielzahl von Zweigen (18) umfasst, die sich radial erstrecken und um die Rotationsachse (4) herum verteilt sind,
**dadurch gekennzeichnet, dass** die Felge (6) eine Schweißnaht (10) umfasst, die winklig zwischen zwei aufeinanderfolgenden Schenkeln (18) der Scheibe (8) angeordnet ist, wobei das Rad (2) ein radiales Spiel (24) umfasst, das die Scheibe (8) von der trennt Felge (6), wobei die Schweißnaht (10) winklig in Höhe des Radialspiels (24) angeordnet ist.

2. Fahrzeug nach Anspruch 1, **dadurch gekennzeichnet, daß** der Steg (8) mehrere winkelig um die Drehachse (4) verteilte Ausnehmungen (22) aufweist, die mit den Schenkeln (18) einen Wechsel bilden, wobei die Schweißnaht (10) winkelig an einem angeordnet ist der Aussparungen (22).

3. Fahrzeug nach Anspruch 1 oder Anspruch 2, **dadurch gekennzeichnet, daß** der Steg (8) aus Stahl und die Felge (6) aus Aluminium bestehen.

4. Fahrzeug nach einem der Ansprüche 1 bis 3, **dadurch gekennzeichnet, dass** der Steg (8) eine Zone geringerer radialer Dicke aufweist, an der die Schweißnaht (10) positioniert ist.

5. Fahrzeug nach einem der Ansprüche 1 bis 4, **dadurch gekennzeichnet, dass** der Steg (8) einen die Schweißnaht (10) entlang des Umfangs der Felge (6) überlappenden Ringflansch (30) aufweist.

6. Fahrzeug nach einem der Ansprüche 1 bis 5, **dadurch gekennzeichnet, dass** die Schweißnaht (10) eine erste Schweißnaht ist, insbesondere eine axiale Schweißnaht, und der Schleier (8) mit zweiten Schweißnähten (34) an der Felge (6) befestigt ist), wobei jede zweite Schweißnaht (34) winklig in einem Abstand von der ersten Schweißnaht angeordnet ist.

7. Fahrzeugrad (2), das eine äußere Felge (6) und eine innere Scheibe (8) umfasst, die dazu bestimmt ist, an einer Nabe des Fahrzeugs befestigt zu werden, wobei die Scheibe (8) eine Vielzahl von Ästen (18) umfasst, die im Winkel auf der Innenseite verteilt sind der Felge (6), **dadurch gekennzeichnet, dass** die Felge (6) eine Schweißnaht umfasst, die winklig zwischen zwei aufeinanderfolgenden Schenkeln (18) des Stegs (8) angeordnet ist, wobei das Rad (2) ein radiales Spiel (24) aufweist, das den Steg (8) der Felge (6), wobei die Schweißnaht (10) winklig in Höhe des Radialspiels (24) angeordnet ist.

8. Ein Verfahren zum Herstellen eines Fahrzeugrads (2), wobei das Verfahren die folgenden Schritte umfasst:
a) Lieferung oder Herstellung eines äußeren Kranzes (100),
b) Lieferung oder Herstellung eines inneren Schleiers (102),
c) Umreifung (104) des Innensteges (8) innerhalb des Außenrandes (6), **dadurch gekennzeichnet, dass** in Schritt (a) Bereitstellen oder Herstellen eines äußeren Kranzes (100), der äußere Kranz eine Schweißnaht (10) umfasst;
in Schritt (b) Zuführen oder Herstellen einer inneren Bahn (102), wobei die Bahn (8) mehrere winklig verteilte Zweige (18) aufweist;
und
während Schritt (c) Umreifung (104) die Schweißnaht (10) winkelig zwischen zwei aufeinanderfolgenden Zweigen (18) des Stegs (8) liegt, und am Ende von Schritt (c) Umreifung (104) der Steg (8) und der Rand (6) eine kreisförmige Grenzfläche (36) aufweist, die eine Abwechslung von ersten Zonen und zweiten Zonen bildet, wobei der radiale Kontaktdruck zwischen dem Steg (8) und dem Rand (6) in den zweiten Zonen größer ist als in den ersten Zonen, und die Schweißnaht (10) winklig in einer der ersten Zonen angeordnet ist.

## Claims

1. Vehicle, in particular a motor vehicle, the vehicle comprising a hub, and a wheel (2) with an axis of rotation (4), a rim (6) around the axis of rotation (4) and a web (8) connecting the rim (6) to the hub,
the veil (8) comprising a plurality of branches (18) extending radially and distributed around the axis of rotation (4),
**characterized in that** the rim (6) comprises a weld (10) arranged angularly between two consecutive branches (18) of the disc (8), the wheel (2) comprising a radial play (24) separating the disc (8) from the rim (6), the weld (10) being arranged angularly at the level of the radial play (24).

2. Vehicle according to Claim 1, **characterized in that** the web (8) has several recesses (22) distributed angularly around the axis of rotation (4) forming an alternation with the branches (18), the weld (10) being arranged angularly at one of the recesses (22).

3. Vehicle according to Claim 1 or Claim 2, **characterized in that** the web (8) is made of steel, and the rim (6) is made of aluminium.

4. Vehicle according to one of claims 1 to 3, **characterized in that** the web (8) has a zone of lesser radial thickness at which is positioned the weld (10).

5. Vehicle according to one of claims 1 to 4, **characterized in that** the web (8) has a circular flange (30) overlapping the weld (10) along the circumference of the rim (6).

6. Vehicle according to one of claims 1 to 5, **characterized in that** the weld (10) is a first weld, in particular an axial weld, and the veil (8) is fixed to the rim (6) using second welds (34), each second weld (34) being angularly disposed at a distance from the first weld.

7. Vehicle wheel (2) comprising an outer rim (6) and an inner disc (8) intended to be fixed to a hub of the vehicle, the disc (8) comprising a plurality of branches (18) distributed angularly at the inside of the rim (6), **characterized in that** the rim (6) comprises a weld placed angularly between two consecutive branches (18) of the web (8), the wheel (2) comprising a radial play (24) separating the web (8) of the rim (6), the weld (10) being arranged angularly at the level of the radial play (24) .

8. A method of manufacturing a vehicle wheel (2), the method comprising the following steps :
a) supply or production of an outer rim (100),
b) supply or production of an internal veil (102),
c) hooping (104) of the inner web (8) inside the outer rim (6), **characterized in that** in step (a) providing or making an outer rim (100), the outer rim comprises a weld (10) ;
in step (b) supply or production of an internal web (102), said web (8) has several branches (18) distributed angularly ;
and
during step (c) hooping (104), the weld (10) is angularly between two consecutive branches (18) of the web (8), and at the end of step (c) hooping (104), the web (8) and the rim (6) have a circular interface (36) forming an alternation of first zones and second zones, the radial contact pressure between the web (8) and the rim (6) being greater in the second zones with respect to the first zones, and the weld (10) being disposed angularly in one of the first zones.
